(19) Europäisches Patentamt / European Patent Office / Office européen des brevets

(11) **EP 2 586 223 B1**

(12) **EUROPEAN PATENT SPECIFICATION**

(45) Date of publication and mention
of the grant of the patent:
**27.05.2020 Bulletin 2020/22**

(51) Int Cl.:
*H04W 8/00* *(2009.01)*    *H04W 84/18* *(2009.01)*

(21) Application number: **11728148.5**

(22) Date of filing: **17.06.2011**

(86) International application number:
**PCT/US2011/040968**

(87) International publication number:
**WO 2011/163088 (29.12.2011 Gazette 2011/52)**

(54) **EVENT-TRIGGERED PEER DISCOVERY**

EREIGNISGESTEUERTE PEER-ENTDECKUNG

DÉCOUVERTE DE PAIRS DÉCLENCHÉE PAR UN ÉVÉNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.06.2010 US 357888 P**

(43) Date of publication of application:
**01.05.2013 Bulletin 2013/18**

(73) Proprietor: **Qualcomm Incorporated
San Diego, CA 92121-1714 (US)**

(72) Inventors:
• **PALANKI, Ravi
San Diego, California 92121 (US)**
• **BHUSHAN, Naga
San Diego, California 92121 (US)**
• **MALLADI, Durga Prasad
San Diego, California 92121 (US)**

(74) Representative: **Tomkins & Co
5 Dartmouth Road
Dublin 6 (IE)**

(56) References cited:
**EP-A1- 1 450 517    US-A1- 2009 323 648**

## Description

## BACKGROUND

### I. Field

The present disclosure relates generally to communication, and more specifically to techniques for supporting peer-to-peer (P2P) communication.

### II. Background

Wireless communication networks are widely deployed to provide various communication content such as voice, video, packet data, messaging, broadcast, etc. These wireless networks may be multiple-access networks capable of supporting multiple users by sharing the available network resources. Examples of such multiple-access networks include Code Division Multiple Access (CDMA) networks, Time Division Multiple Access (TDMA) networks, Frequency Division Multiple Access (FDMA) networks, Orthogonal FDMA (OFDMA) networks, and Single-Carrier FDMA (SC-FDMA) networks. A wireless communication network may also be referred to as a wide area network (WAN).

A wireless communication network may include a number of base stations that can support communication for a number of devices. A device may communicate with a base station via the downlink and uplink. The downlink (or forward link) refers to the communication link from the base station to the device, and the uplink (or reverse link) refers to the communication link from the device to the base station. The device may also be able to communicate peer-to-peer with one or more other devices. It may be desirable to efficiently support P2P communication between devices.

EP1 450 517 A1 discloses a peer discovery system where search logic is initiated based on a triggering event.

US 2009/323648 A1 discloses multi-rate proximity based peer discovery methods and apparatus.

## SUMMARY

The invention is defined by the subject-matter of the independent claims.

Preferred embodiments are set out in the dependent claims.

Techniques for supporting P2P communication are described herein. In an aspect, a device may perform peer discovery based on trigger events. In one design, the device may perform peer discovery when triggered by an event instead of all the time at a periodic rate. In another design, the device may perform peer discovery in a different manner when triggered by an event.

In one design, the device may detect an event triggering peer discovery, which may be an application becoming active on the device, a change in the position of the device, the device being turned on, etc. The device may perform peer discovery based on detection of the event triggering peer discovery. In one design, the device may start peer discovery in response to detecting the trigger event. In another design, the device may change at least one characteristic (e.g., the periodicity) of peer discovery in response to detecting the trigger event. The device may transmit a proximity detection signal (PDS) and/or receive proximity detection signals from other devices for peer discovery.

In another design, the device may determine an application becoming active on the device. The device may transmit a query (e.g., in a proximity detection signal) to request for a service from a peer device to support the application. The query may identify the service requested by the device, a particular device type (e.g., a printer) from which the service is requested, etc.

Various aspects and features of the disclosure are described in further detail below.

## BRIEF DESCRIPTION OF THE DRAWINGS

FIG. 1 shows a wireless communication network.
FIG. 2 shows a baseline PDS transmission and reception scheme.
FIG. 3 shows a client-driven PDS transmission scheme.
FIG. 4 shows a client-driven PDS reception scheme.
FIG. 5 shows mobility-based PDS transmission with low periodicity PDS transmission.
FIGS. 6 and 7 show two processes for performing peer discovery.
FIG. 8 shows a block diagram of a device.
FIG. 9 shows a block diagram of two devices.

## DETAILED DESCRIPTION

The techniques described herein may be used for various wireless communication networks such as CDMA, TDMA, FDMA, OFDMA, SC-FDMA and other wireless networks. The terms "network" and "system" are often used interchangeably. A CDMA network may implement a radio technology such as Universal Terrestrial Radio Access (UTRA), cdma2000, etc. UTRA includes Wideband CDMA (WCDMA), Time Division Synchronous CDMA (TD-SCDMA), and other variants of CDMA. cdma2000 covers IS-2000, IS-95 and IS-856 standards. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM®, etc. UTRA and E-UTRA are part of Universal Mobile Telecommunication System (UMTS). 3GPP Long Term Evolution (LTE) and LTE-Advanced (LTE-A), in both frequency division duplexing (FDD) and time division duplexing (TDD), are new releases of UMTS that use E-UTRA, which employs OFDMA on the downlink and SC-FDMA on the uplink. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). The techniques described herein may be used for the wireless networks and radio technologies mentioned above as well as other wireless networks and radio technologies.

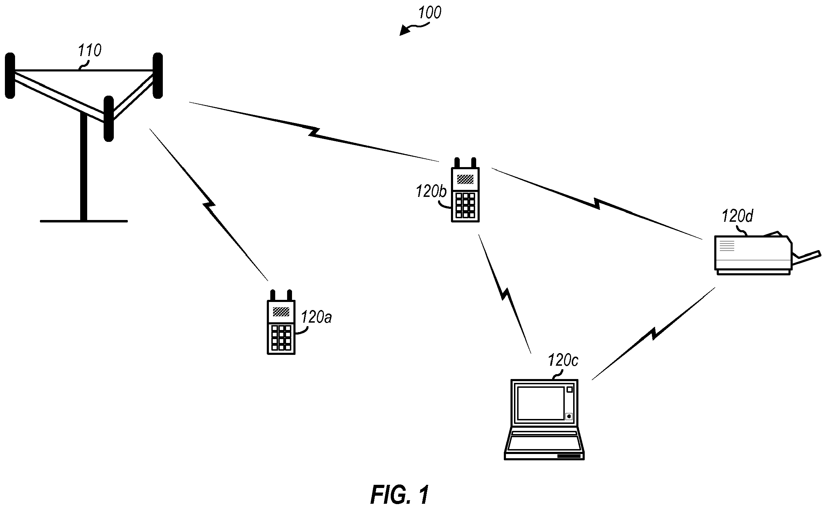

FIG. 1 shows a wireless communication network 100, which may include a number of base stations and other network entities. For simplicity, only one base station 110 is shown in FIG. 1. A base station may be an entity that communicates with devices and may also be referred to as a Node B, an evolved Node B (eNB), an access point, etc. A base station may provide communication coverage for a particular geographic area and may support communication for devices located within the coverage area. To improve network capacity, the overall coverage area of a base station may be partitioned into multiple (e.g., three) smaller areas. Each smaller area may be served by a respective base station subsystem. In 3GPP, the term "cell" can refer to a coverage area of a base station and/or a base station subsystem serving this coverage area, depending on the context in which the term is used.

Devices 120 may be dispersed throughout the wireless network, and each device may be stationary or mobile. A device may also be referred to as a user equipment (UE), a user device, a mobile station, a terminal, an access terminal, a subscriber unit, a station, a node, etc. A device may be a cellular phone, a personal digital assistant (PDA), a wireless modem, a wireless communication device, a handheld device, a laptop computer, a cordless phone, a wireless local loop (WLL) station, a smart phone, a netbook, a smartbook, a tablet, a peripheral device (e.g., a printer), etc. A device may communicate with a base station in the wireless network for WAN communication. A device may also communicate directly with one or more other devices for P2P communication. P2P communication refers to direct communication between two or more devices, without going through a base station. In the example shown in FIG. 1, devices 120a and 120b may communicate with base station 110, and devices 120b, 120c and 120d may communicate peer-to-peer. Devices 120c and 120d may also be capable of communicating with base stations, e.g., when not engaged in P2P communication or possibly concurrent with P2P communication.

One challenge in P2P communication is discovery/detection of peer devices of interest within a particular range, e.g., within radio frequency (RF) range. To facilitate peer discovery, devices that can and/or desire to communicate peer-to-peer may periodically transmit proximity detection signals (PDS). A proximity detection signal may also be referred to as a peer detection signal, a peer discovery signal, etc. A proximity detection signal may comprise a pilot or a reference signal and may include information used to identify a device transmitting the proximity detection signal. A device may detect other devices near its proximity based on peer detection signals transmitted by these other devices.

A proximity detection signal may have various attributes that may be helpful for peer discovery. In one design, a proximity detection signal may be transmitted with low reuse, which may reduce the interference observed by the proximity detection signal and enable detection of the signal by devices located farther away. The proximity detection signal may also be transmitted such that it can be detected with greater reliability and/or in poor channel conditions. The proximity detection signal may also be designed such that as little transmit power as possible is consumed to transmit the signal.

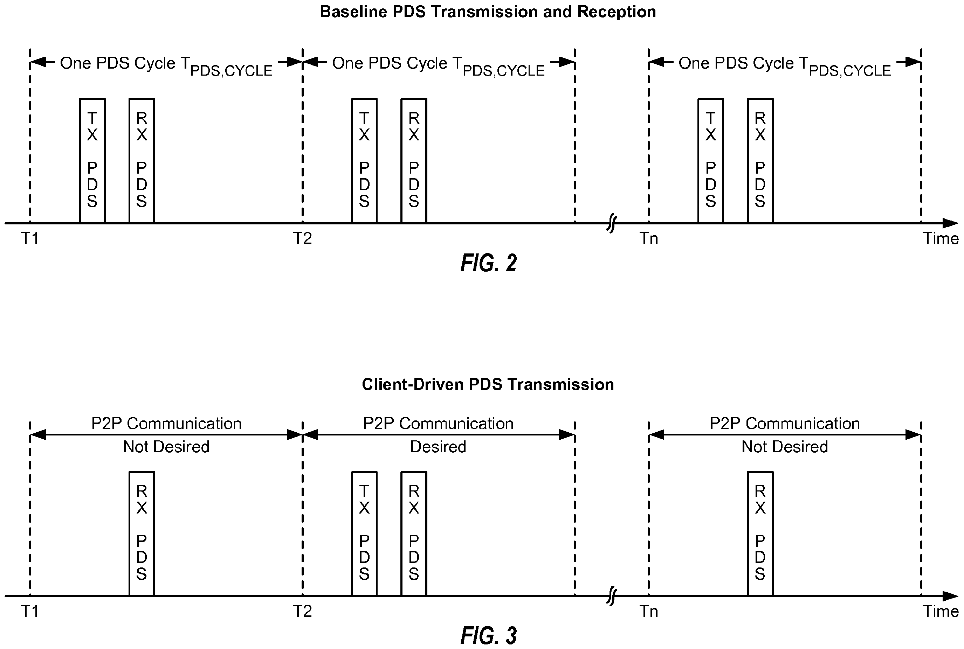

FIG. 2 shows a baseline PDS transmission and reception scheme with always-on transmission and reception of proximity detection signals. In this baseline PDS scheme, a device may transmit its proximity detection signal (labeled as "TX PDS" in FIG. 2) for an average duration of $T_{PDS,TX}$ and may detect for proximity detection signals (labeled as "RX PDS" in FIG. 2) from peer devices for an average duration of $T_{PDS,RX}$ in each time interval of $T_{PDS,CYCLE}$, where $T_{PDS,TX}$, $T_{PDS,RX}$ and $T_{PDS,CYCLE}$ may each be any suitable value. $T_{PDS,TX}$ may be the average duration of one PDS transmission interval. $T_{PDS,RX}$ may be the average duration of one PDS reception interval. $T_{PDS,CYCLE}$ may be the duration of one PDS cycle.

In one design, the device may be synchronized to its serving cell and may determine its PDS transmission and reception intervals based on the timing of the serving cell. The device may be able to detect proximity detection signals from other devices in the PDS reception intervals. If different cells are not synchronized, then the device may determine the timing of each neighbor cell of interest based on synchronization signals and/or reference signals transmitted by that neighbor cell. The device may then detect proximity detection signals from other devices synchronized to each neighbor cell in PDS reception intervals determined based on the timing of that neighbor cell. In general, the PDS transmission and reception intervals for the device may or may not be contiguous and may be proportional to battery power consumption associated with PDS transmission and reception, respectively, by the device.

The device may periodically transmit and receive proximity detection signals in the baseline PDS scheme, even when no other devices may be interested in communicating with the device. This may result in significant battery power consumption by the device, which may degrade standby battery life of the device. Techniques that can reduce battery power consumption associated with peer discovery would be desirable.

In an aspect, a device may perform peer discovery based on trigger events. In one design of event-triggered peer discovery, the device may perform peer discovery only when triggered by an event instead of all the time at a periodic rate. In this design, the device may transmit a proximity detection signal and/or receive proximity detection signals from peer devices only when triggered by an event for peer discovery. Peer discovery may thus be enabled by trigger events or disabled by absence of trigger events.

In another design of event-triggered peer discovery, the device may perform peer discovery in a different manner when triggered by an event. For example, the device may perform peer discovery less frequently when not triggered by an event and may perform peer discovery more frequently when triggered by an event. As another example, the device may only detect for proximity detection signals from peer devices when not triggered by an event and may transmit a proximity detection signal and detect for proximity detection signals when triggered by an event.

The device may perform peer discovery based on trigger events in other manners. In one design, the device may autonomously perform event-triggered peer discovery. In another design, the device may perform event-triggered peer discovery with network assistance. For example, a wireless network may broadcast information indicating certain devices and/or services being available within the coverage area. The device may use this information to decide whether to perform event-triggered peer discovery. In any case, event-triggered peer discovery may reduce battery power consumption by the device while providing good performance. Peer discovery may be triggered by various types of events, as described below.

In one design, the device may perform peer discovery based on a trigger event corresponding to an application becoming active on the device. The device may start peer discovery when triggered by the application becoming active or may perform peer discovery at a higher periodicity (i.e., a faster rate) when the application becomes active. The device may skip peer discovery or may perform peer discovery at a lower periodicity when not required by any active application on the device. The device may perform peer discovery based on a trigger event in various manners.

FIG. 3 shows a design of a client-driven PDS transmission scheme that may be used for event-triggered peer discovery. In this design, a device may transmit a proximity detection signal only when P2P communication is desired by an application on the device. This design may also be referred to as application-driven PDS transmission.

In one design, the device may autonomously determine when to transmit its proximity detection signal. In the PDS cycle starting at time T1, the device may skip transmitting its proximity detection signal since no applications desire P2P communication. However, the device may still receive proximity detection signals from peer devices. In the PDS cycle starting at time T2, the device may transmit its proximity detection signal since an application desires P2P communication. The device may also receive proximity detection signals from peer devices. In general, the device may transmit its proximity detection signal when an application desires P2P communication and may skip transmitting its proximity detection signal otherwise.

For the design shown in FIG. 3, the average transmit time of the proximity detection signal by the device, $T_{\text{client-driven,PDS,TX}}$, may be expressed as:

$$T_{\text{client-driven,PDS,TX,}} = \lambda \cdot T_{\text{PDS,TX}} \ , \qquad\qquad \text{Eq (1)}$$

where $\lambda$ is a fraction of the time in which an application on the device is active/on. Since $\lambda$ may be a small value, the average transmit time of the device may be much less than that of the baseline PDS scheme. Hence, battery power consumption may be much lower for the client-driven PDS transmission scheme.

For the design shown in FIG. 3, the average receive time for proximity detection signals from peer devices may be equal to $T_{\text{PDS,RX}}$ and may be unchanged from the baseline PDS scheme. This may assume that the number of PDS resources used for transmission of proximity detection signals is the same as in the baseline PDS scheme.

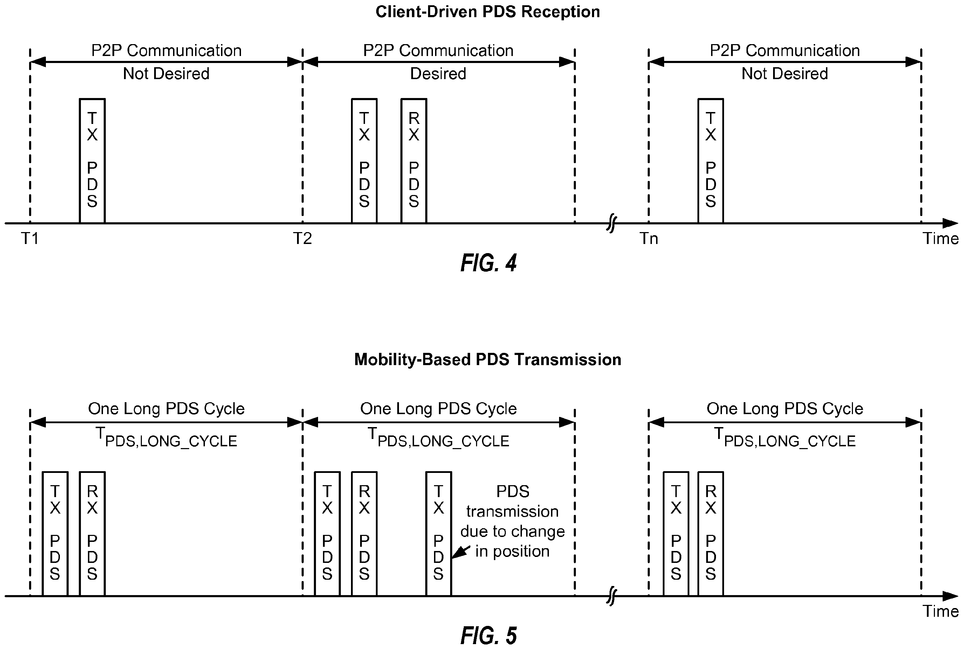

FIG. 4 shows a design of a client-driven PDS reception scheme that may also be used for event-triggered peer discovery. In this design, a device may receive proximity detection signals only when P2P communication is desired by an application on the device. This design may also be referred to as application-driven PDS reception, server-based PDS transmission, etc.

In the design shown in FIG. 4, the device may autonomously determine when to receive proximity detection signals from peer devices. In the PDS cycle starting at time T1, the device may skip receiving proximity detection signals since no applications desire P2P communication. However, the device may still transmit its proximity detection signals. In the PDS cycle starting at time T2, the device may receive proximity detection signals from peer devices since an application desires P2P communication and may also transmit its proximity detection signal. In general, the device may receive proximity detection signals from peer devices when an application desires P2P communication and may skip reception of the proximity detection signals otherwise.

For the design shown in FIG. 4, the average receive time of the proximity detection signals from peer devices, $T_{client-driven,PDS,RX}$, may be expressed as:

$$T_{client-driven,PDS,RX,} = \lambda \cdot T_{PDS,RX} \cdot \qquad \qquad Eq\ (2)$$

Since $\lambda$ may be a small value, the average receive time of the device may be much less than that of the baseline PDS scheme. Hence, battery power consumption may be much lower for the client-driven PDS reception scheme.

In one design, the client-driven PDS reception scheme in FIG. 4 may be used for client-server applications in which server devices provide services to client devices. A server device may broadcast its proximity detection signal in each PDS cycle and may advertise its service(s). For example, the proximity detection signal from the server device may indicate "I provide service X" with one or few bits, which may minimally impact overhead. Client devices may detect for the proximity detection signal from the server device whenever these client devices desire to obtain service from the server device.

In one design, the client-driven PDS transmission scheme in FIG. 3 may also be used for client-server applications. This design may be used for applications in which activity may be infrequent. In this case, it may be more efficient for a client device to broadcast its proximity detection signal indicating a desire for a particular service. For example, the proximity detection signal from the client device may indicate "I want service X" with one or few bits, which may minimally impact overhead. As an example, a server device may be a printer that can print documents for client devices, e.g., desktop computers, laptop computers, cellular phones, etc. Rather than having the printer broadcast its presence all the time, a client device that wants a printer can broadcast a proximity detection signal indicating a desire for a printer (e.g., indicating "I want a printer"). A printer may detect the proximity detection signal from the client device and may (i) start transmitting its proximity detection signal and/or (ii) connect to the client device over the wireless network. This design may allow a server device to operate in a receive-only mode for peer discovery and to turn on only when a client device desires a service offered by the server device.

The client-driven PDS transmission scheme and the client-driven PDS reception scheme described above may reduce battery power consumption of devices by transmitting or receiving proximity detection signals only when an application is active. Which particular scheme to use may be dependent on various factors such as how often the application is active, the available power source, etc. For example, if a server device (e.g., a printer) is connected to a power outlet, then battery power consumption may not be a concern, and it may be desirable to have the server device transmits its proximity detection signal all the time. In general, the client-driven PDS transmission scheme and/or the client-driven PDS reception scheme may be selected for an application based on one or more factors such as the application type, server attributes, client attributes, etc.

The client-driven PDS transmission scheme may also reduce utilization of PDS resources used to transmit proximity detection signals. The amount of PDS resources used by the client-driven PDS transmission scheme may be reduced by a factor of $\lambda$ in comparison to the baseline PDS scheme. If lower PDS resource utilization is not a design goal, then significantly reduced latency may be achieved by using the same amount of PDS resources as in the baseline PDS scheme. In particular, the PDS cycle may be reduced from $T_{PDS,CYCLE}$ to $\lambda \cdot T_{PDS,CYCLE}$, and the same amount of PDS resources may be used since the proximity detection signal is transmitted only $\lambda$ percent of the time. However, delay may be reduced from $T_{PDS,RX}$ down to $\lambda \cdot T_{PDS,RX}$ due to the shorter PDS cycle. Factor $\lambda$ may be dependent on the particular application and may be on the order of $10^{-2}$ or lower. For example, in the printer application described above, a print request may be sent once every few minutes in a typical office scenario and every few hours or even days in a home scenario. Thus, client-driven PDS transmissions may occur every few minutes, hours, or days as compared to seconds for the baseline PDS scheme.

The client-driven PDS transmission scheme and the client-driven PDS reception scheme may significantly reduce battery power consumption for applications that are active infrequently. However, these schemes may not be applicable for applications that require peer discovery to be performed continually. An example may be an application that buzzes a cell phone if a friend's cell phone is nearby. Such an application may require a device to continually perform peer discovery.

In one design, a mobility-based PDS transmission scheme may be used for devices that need to continually perform peer discovery. In this scheme, a device may transmit its proximity detection signal and/or receive proximity detection signals from peer devices when its position changes. A change in the position of the device may be detected and may trigger transmission of the proximity detection signal by the device.

A change in the position of the device may be detected in various manners and may not need to be accurately detected. In one design, the position of the device may be determined based on its serving cell, and a serving cell identity (ID) may be used to indicate the position of the device. The device may be deemed to have changed its position if a new serving cell is selected and may transmit its proximity detection signal when its serving cell changes. In another design, the position of the device may be determined based on RF finger printing. In this design, the device may measure the received signal strength of different cells and may determine that it has moved based on sufficient changes in the received signal strength of the cells. In yet another design, the position of the device may be determined based on GPS positioning, network-based positioning, etc. The device may determine that its position has changed based on its prior and current position. In yet another design, a change in the position of the device may be detected based on the speed or velocity of the device. Speed may cover magnitude whereas velocity may cover both magnitude and direction. The device may include a sensor or other mechanism that can determine the speed or velocity of the device. In yet another design, a change in the position of the device may be detected based on changes in the received signal strength of proximity detection signals from other devices. The device may be able to determine that it (instead of another device) has moved if the received signal strength of proximity detection signals from more than one other device changes by a sufficient amount. The device may also detect a change in its position in other manners.

A user may be stationary most of the time, and the average number of serving cell changes observed by the user's device may be less than ten per day. The mobility-based PDS transmission scheme may cut down the number of PDS transmissions needed by a factor of hundreds or thousands since there may be few PDS transmissions per day for the mobility-based PDS transmission scheme versus one every few seconds for the baseline PDS scheme.

The mobility-based PDS transmission scheme may be used for proximity detection signals having a relatively long range, e.g., covering several cells. In this case, detection of a change in position may be easily performed based on the serving cell ID, as described above. The mobility-based PDS transmission scheme may also be used for proximity detection signals having medium or shorter range. In this case, detection of a change in position may be determined based on positioning (e.g., GPS positioning or network-based positioning), pilot strength measurements, etc.

In one design, a device may autonomously perform mobility-based PDS transmission, without any network assistance. The device may have its own algorithm to determine when its position has changed and to transmit its proximity detection signal when a change in position is detected.

In general, a device may transmit its proximity detection signal and/or receive proximity detection signals from other devices whenever an event triggering peer discovery is detected. The trigger event may correspond to an application becoming active, or a change in the position of the device, or the device being powered on, etc.

Various techniques may be used to improve peer discovery with PDS transmissions being sent infrequently for event-triggered peer discovery, e.g., for the mobility-based PDS transmission scheme or the client-driven PDS transmission scheme.

In one design, a device may transmit its proximity detection signal multiple times in response to detection of an event triggering peer discovery. This design may improve reception of the proximity detection signal by other devices. In one design, consecutive transmissions of the proximity detection signal may be uniformly spaced apart by a fixed delay. In another design, consecutive transmissions of the proximity detection signal may be spaced apart by a progressively longer (exponentially increasing) delay. For both designs, some randomness may be introduced in the delay between successive transmissions of the proximity detection signal in order to randomize collision with proximity detection signals from other devices.

In another design, a given device A may transmit its proximity detection signal when it is powered on to enable detection by peer devices that have moved. Device A may be turned off when another device B moved and transmitted its proximity detection signal. Hence, device A may not know that device B has moved into the vicinity of device A. Device A may transmit its proximity detection signal when it is turned on in order for device B to detect device A.

In yet another design, a device may perform peer discovery at a low periodicity when no trigger events are detected. The device may perform peer discovery at a higher periodicity and/or in a different manner when a trigger event is detected.

**FIG. 5** shows a design of mobility-based PDS transmission with low periodicity PDS transmission. In this design, a device may transmit its proximity detection signal whenever its position changes. The device may also transmit its proximity detection signal with a low periodicity even in the absence of changes in its position. In particular, the device may transmit its proximity detection signal in every cycle of $T_{PDS,LONG\_CYCLE}$, which may be longer than $T_{PDS,CYCLE}$ in the baseline PDS scheme.

A device may also transmit its proximity detection signal in other manners to improve reception of the proximity detection signal for event-triggered peer discovery. Any one or any combination of the designs described above may be used.

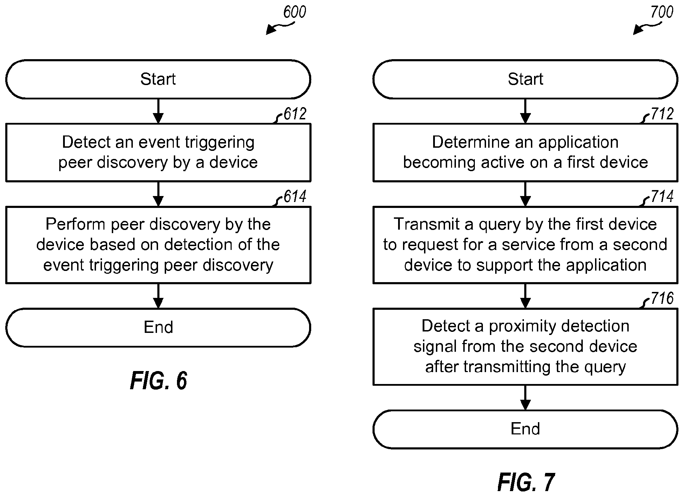

**FIG. 6** shows a design of a process 600 for performing peer discovery. Process 600 may be performed by a device (as described below) or by some other entity. The device may detect an event triggering peer discovery by the device (block 612). In one design, the device may detect an application becoming active on the device as the trigger event. In another design, the device may detect a change in its position as the trigger event. The device may detect the change in its position based on a serving cell (e.g., a change in the serving cell) of the device, signal strength measurements made by the device, positioning of the device, etc. In yet another design, the device may detect being turned on as the trigger event. The device may also detect the trigger event in other manners.

The device may perform peer discovery based on detection of the event triggering peer discovery (block 614). In one design, the device may start peer discovery in response to detecting the trigger event. In one design, the device may transmit a proximity detection signal in response to detecting the trigger event, e.g., as shown in FIG. 3. The device may skip transmission of the proximity detection signal when trigger events are not detected. In another design, the device may receive proximity detection signals from peer devices in response to detecting the trigger event, e.g., as shown in FIG. 4. The device may skip receiving proximity detection signals from peer devices when trigger events are not detected.

In another design, the device may change at least one characteristic of peer discovery in response to detecting the trigger event. For example, the device may change the periodicity of peer discovery in response to detecting the trigger event.

In one design, for client-driven PDS transmission, the device may transmit a proximity detection signal when an application becomes active. The device may skip transmission of the proximity detection signal when the application is not active. In one design, for client-driven PDS reception, the device may receive proximity detection signals from peer devices when the application becomes active. The device may skip receiving the proximity detection signals from the peer devices when the application is not active. In one design, for mobility-based PDS transmission, the device may transmit a proximity detection signal when a change in its position is detected. In one design, the device may transmit the proximity detection signal when the device is turned on. The device may also transmit the proximity detection signal and/or receive proximity detection signals from peer devices in other manners.

In one design, the device may transmit a proximity detection signal a plurality of times in response to detecting the trigger event. In one design, successive transmissions of the proximity detection signal may be spaced apart by a fixed delay. In another design, successive transmissions of the proximity detection signal may be spaced apart by a progressively longer delay.

In one design, the device may transmit a proximity detection signal at a first periodicity when events triggering peer discovery are not detected. The device may transmit the proximity detection signal at a second periodicity when an event triggering peer discovery is detected. The first periodicity may be lower than the second periodicity.

**FIG. 7** shows a design of a process 700 for performing peer discovery. Process 700 may be performed by a first device (as described below) or by some other entity. The first device may determine an application becoming active on the first device (block 712). The first device may transmit a query to request for a service from a second/peer device to support the application (block 714). In one design, the query may be sent in a proximity detection signal, which may be transmitted by the first device for peer discovery. The query may also be sent in other manners. The query may identify the service requested by the first device, a particular device type (e.g., a printer) from which the service is requested, etc.

In one design, the query may request the second device to start transmitting a proximity detection signal. The first device may detect a proximity detection signal from the second device after transmitting the query (block 716). In another design, the query may request the second device to contact the first device via a wireless network. The first device may then communicate with the second device via the wireless network.

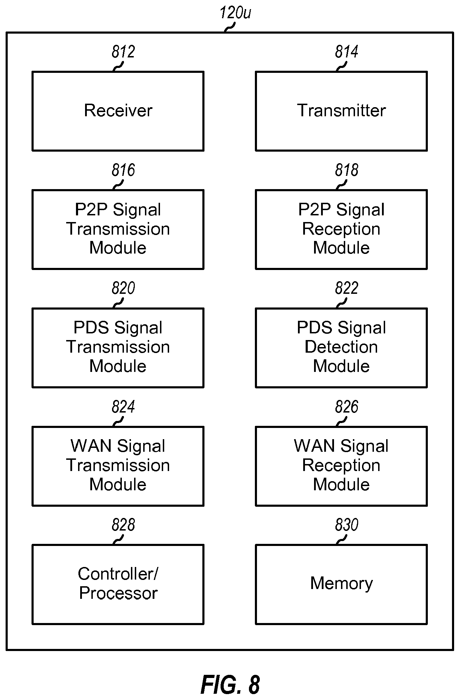

**FIG. 8** shows a block diagram of a design of a device 120u, which may be one of the devices in FIG. 1. Within device 120u, a receiver 812 may receive P2P signals transmitted by other devices for P2P communication and downlink signals transmitted by base stations for WAN communication. A transmitter 814 may transmit P2P signals to other devices for P2P communication and uplink signals to base stations for WAN communication.

A module 816 may generate P2P signals and may send the P2P signals to other devices for P2P communication. A module 818 may receive P2P signals from other devices and may process the received P2P signals. A module 820 may generate a proximity detection signal for device 120u and may send the proximity detection signal to enable other devices to detect the presence of device 120u. A module 822 may detect proximity detection signals from other devices. A module 824 may generate uplink signals and may send the uplink signals to base stations for WAN communication. A module 826 may receive downlink signals from base stations and may process the received downlink signals.

The various modules within device 120u may operate as described above. A controller/processor 828 may direct the operation of various modules within device 120u. A memory 830 may store data and program codes for device 120u. The modules within device 120u may comprise processors, electronic devices, hardware devices, electronic components, logical circuits, memories, software codes, firmware codes, etc., or any combination thereof.

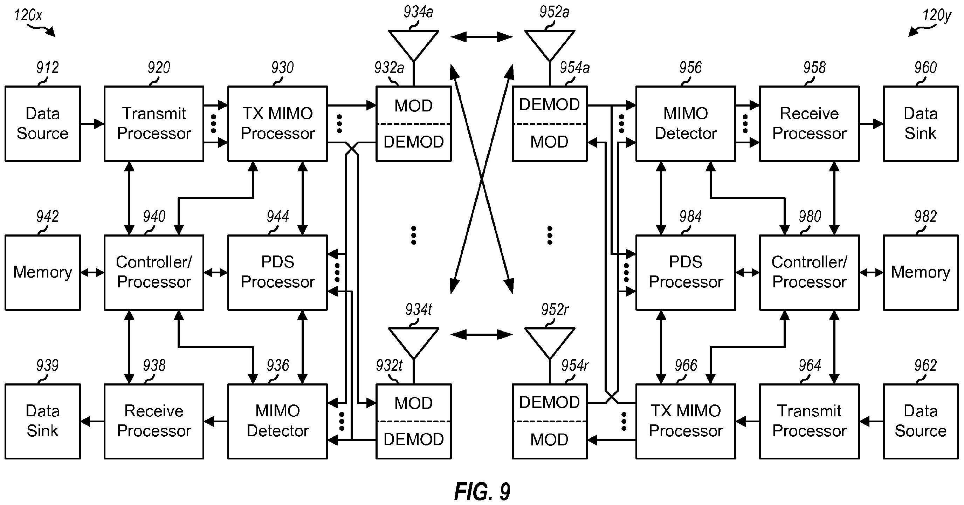

**FIG. 9** shows a block diagram of a design of devices 120x and 120y, which may be any two devices 120 in FIG. 1. In this design, device 120x is equipped with T antennas 934a through 934t, and device 120y is equipped with R antennas 952a through 952r, where in general T ≥ 1 and R ≥ 1.

At device 120x, a transmit processor 920 may receive data from a data source 912 and control information from a controller/processor 940. Transmit processor 920 may process (e.g., encode, interleave, and symbol map) the data and control information and provide data symbols and control symbols, respectively. A PDS processor 944 may generate reference symbols for a proximity detection signal. A transmit (TX) multiple-input multiple-output (MIMO) processor 930 may perform spatial processing (e.g., precoding) on the data symbols, the control symbols, and/or the reference symbols, if applicable, and may provide T output symbol streams to T modulators (MODs) 932a through 932t. Each modulator 932 may process a respective output symbol stream (e.g., for OFDM, SC-FDM, etc.) to obtain an output sample stream. Each modulator 932 may further process (e.g., convert to analog, amplify, filter, and upconvert) the output sample stream to obtain a modulated signal. T modulated signals from modulators 932a through 932t may be transmitted via T antennas 934a through 934t, respectively.

At device 120y, antennas 952a through 952r may receive the modulated signals from device 120x, other devices, and/or base stations and may provide received signals to demodulators (DEMODs) 954a through 954r, respectively. Each demodulator 954 may condition (e.g., filter, amplify, downconvert, and digitize) a respective received signal to obtain received samples. Each demodulator 954 may further process the received samples (e.g., for OFDM, SC-FDM, etc.) to obtain received symbols. A MIMO detector 956 may obtain received symbols from all R demodulators 954a through 954r, perform MIMO detection on the received symbols if applicable, and provide detected symbols. A receive processor 958 may process (e.g., demodulate, deinterleave, and decode) the detected symbols, provide decoded data to a data sink 960, and provide decoded control information to a controller/processor 980. A PDS processor 984 may detect proximity detection signals from device 120x and/or other devices.

At device 120y, data from a data source 962, control information from controller/processor 980, and reference symbols for a proximity detection signal from PDS processor 984 may be processed by a transmit processor 964, precoded by a TX MIMO processor 966 if applicable, further processed by modulators 954, and transmitted via antennas 952. At device 120x, the modulated signals from device 120y, other devices, and base stations may be received by antennas 934, processed by demodulators 932, detected by a MIMO detector 936 if applicable, and further processed by a receive processor 938 to obtain the decoded data and control information transmitted by device 120y. PDS processor 944 may detect proximity detection signals from device 120y and/or other devices.

Controllers/processors 940 and 980 may direct the operation at devices 120x and 120y, respectively. Controller/processor 940 and/or other processors and modules at device 120x may perform or direct process 600 in FIG. 6, process 700 in FIG. 7, and/or other processes for the techniques described herein. Controller/processor 980 and/or other processors and modules at device 120y may also perform or direct process 600, process 700, and/or other processes for the techniques described herein. Memories 942 and 982 may store data and program codes for devices 120x and 120y, respectively.

In one configuration, apparatus 120u, 120x, or 120y for wireless communication may include means for detecting an event triggering peer discovery by a device, and means for performing peer discovery by the device based on detection of the event triggering peer discovery.

In another configuration, apparatus 120u, 120x, or 120y for wireless communication may include means for determining an application becoming active on a first device, means for transmitting a query by the first device to request for a service from a second device to support the application, and means for detecting a proximity detection signal from the second device after transmitting the query.

In an aspect, the aforementioned means may be module 816, 818, 820 and/or 822 at device 120u, processor 920, 938, 940 and/or 944 at device 120x, or processors 958, 964, 980 and/or 984 at device 120y, which may be configured to perform the functions recited by the aforementioned means. In another aspect, the aforementioned means may be one or more modules or any apparatus configured to perform the functions recited by the aforementioned means.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the disclosure herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where *disks* usually reproduce data magnetically, while *discs* reproduce data optically with lasers. Combinations of the above should also be included within the scope of computer-readable media.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure. Thus, the disclosure is not intended to be limited to the examples and designs described herein but is to be accorded the widest scope consistent with the principles disclosed herein.

**Claims**

1.  A method for wireless communication, comprising:

    Receiving, at a device, broadcast information broadcast from a wireless network, said broadcast information indicating certain devices and/or services being available within a coverage area;
    deciding, at the device, whether to perform event-triggered peer discovery based on the received broadcast information;

    detecting (612), by the device, an event triggering peer discovery if the decision is made to perform event-triggered peer discovery; and
    performing (614), by the device, peer discovery based on detection of the event triggering peer discovery.

2.  The method of claim 1, wherein the detecting the event triggering peer discovery comprises detecting (712) an application becoming active on the device or detecting a change in position of the device or detecting the device being turned on.

3.  The method of claim 2, wherein the detecting the change in the position of the device comprises detecting the change in the position of the device based on a serving cell of the device, or signal strength measurements made by the device, or positioning of the device, or a combination thereof.

4. The method of any previous claim, wherein the performing peer discovery based on detection of the event triggering peer discovery comprises starting peer discovery by the device in response to detecting the event triggering peer discovery.

5. The method of any of claims 1 to 3, wherein the performing peer discovery based on detection of the event triggering peer discovery comprises transmitting a proximity detection signal by the device in response to detecting the event triggering peer discovery.

6. The method of claim 5, further comprising:
skipping transmission of the proximity detection signal by the device when events triggering peer discovery are not detected.

7. The method of any of claims 1 to 3, wherein the performing peer discovery based on detection of the event triggering peer discovery comprises receiving proximity detection signals from peer devices in response to detecting the event triggering peer discovery.

8. The method of claim 7, further comprising:
skipping reception of the proximity detection signals from the peer devices when events triggering peer discovery are not detected.

9. The method of any of claims 1 to 3, wherein the performing peer discovery based on detection of the event triggering peer discovery comprises changing periodicity of peer discovery by the device in response to detecting the event triggering peer discovery or changing at least one characteristic of peer discovery by the device in response to detecting the event triggering peer discovery.

10. The method of any of claims 1 to 3, wherein the performing peer discovery based on detection of the event triggering peer discovery comprises transmitting a proximity detection signal a plurality of times in response to detecting the event triggering peer discovery.

11. The method of claim 10, wherein successive transmissions of the proximity detection signal are spaced apart by a fixed delay or spaced apart by a progressively longer delay.

12. The method of any previous claim, further comprising:
transmitting (714) a proximity detection signal at a first periodicity when events triggering peer discovery are not detected; and
transmitting the proximity detection signal at a second periodicity when the event triggering peer discovery is detected, the first periodicity being lower than the second periodicity.

13. A device for wireless communication, comprising:

means for receiving broadcast information broadcast from a wireless network, said broadcast information indicating certain devices and/or services being available within a coverage area;
means for deciding whether to perform event-triggered peer discovery based on the received broadcast information; ;

means for detecting an event triggering peer discovery if the decision is made to perform event-triggered peer discover; and
means for performing peer discovery based on detection of the event triggering peer discovery.

14. A computer program product, comprising:
a non-transitory computer-readable medium comprising code which, when executed by the device of claim 13, causes the device to carry out the steps of the method of any of claims 1 to 12.

**Patentansprüche**

1. Ein Verfahren für Drahtloskommunikation, das Folgendes aufweist:

Empfangen, an einer Einrichtung, von Broadcast-Information, die von einem Drahtlosnetzwerk gebroadcastet bzw. ausgestrahlt wird, wobei die Broadcast-Information anzeigt, dass bestimmte Einrichtungen und/oder Dienste innerhalb eines Abdeckungsbereichs verfügbar sind;

Entscheiden, an der Einrichtung, ob ereignisausgelöste Peer-Discovery bzw. Peer-Auffindung durchgeführt werden soll basierend auf der empfangenen Broadcast-Information;

Detektieren (612), durch die Einrichtung, eines Ereignisses, das Peer-Auffindung auslöst, wenn die Entscheidung getroffen wird ereignisausgelöste Peer-Auffindung durchzuführen; und

Durchführen (614), durch die Einrichtung, von Peer-Auffindung basierend auf einer Detektion des Ereignisses, das Peer-Auffindung auslöst.

2. Verfahren nach Anspruch 1, wobei das Detektieren des Ereignisses, das Peer-Auffindung auslöst, Detektieren (712) einer Anwendung aufweist, die auf der Einrichtung aktiv wird, oder Detektieren einer Änderung einer Position der Einrichtung oder Detektieren, dass die Einrichtung angeschaltet wird.

3. Verfahren nach Anspruch 2, wobei das Detektieren der Änderung der Position der Einrichtung Detektieren der Änderung der Position der Einrichtung basierend auf einer versorgenden Zelle der Einrichtung oder Signalstärkenmessungen, die durch die Einrichtung vorgenommen werden, oder einer Positionsbestimmung der Einrichtung oder einer Kombination davon aufweist.

4. Verfahren nach einem vorhergehenden Anspruch, wobei das Durchführen von Peer-Auffindung basierend auf einer Detektion des Ereignisses, das Peer-Auffindung auslöst, Starten einer Peer-Auffindung durch die Einrichtung ansprechend auf Detektieren des Ereignisses, das Peer-Auffindung auslöst, aufweist.

5. Verfahren nach einem der Ansprüche 1 bis 3, wobei das Durchführen von Peer-Auffindung basierend auf einer Detektion des Ereignisses, das Peer-Auffindung auslöst, Senden eines Nähedetektionssignals durch die Einrichtung ansprechend auf Detektieren des Ereignisses, das Peer-Auffindung auslöst, aufweist.

6. Verfahren nach Anspruch 5, das weiter Folgendes aufweist:
Auslassen einer Sendung bzw. Übertragung des Nähedetektionssignals durch die Einrichtung, wenn Ereignisse, die eine Peer-Auffindung auslösen, nicht detektiert werden.

7. Verfahren nach einem der Ansprüche 1 bis 3, wobei das Durchführen von Peer-Auffindung basierend auf einer Detektion des Ereignisses, das Peer-Auffindung auslöst, Empfangen von Nähedetektionssignalen von Peer-Einrichtungen ansprechend auf Detektieren des Ereignisses, das Peer-Auffindung auslöst, aufweist.

8. Verfahren nach Anspruch 7, das weiter Folgendes aufweist:
Auslassen eines Empfangs der Nähedetektionssignale von den Peer-Einrichtungen, wenn Ereignisse, die Peer-Auffindung auslösen, nicht detektiert werden.

9. Verfahren nach einem der Ansprüche 1 bis 3, wobei das Durchführen von Peer-Auffindung basierend auf einer Detektion des Ereignisses, das Peer-Auffindung auslöst, Ändern einer Periodizität von Peer-Auffindung durch die Einrichtung ansprechend auf Detektieren des Ereignisses, das Peer-Auffindung auslöst, oder Ändern wenigstens einer Charakteristik von Peer-Auffindung durch die Einrichtung ansprechend auf Detektieren des Ereignisses, das Peer-Auffindung auslöst, aufweist.

10. Verfahren nach einem der Ansprüche 1 bis 3, wobei das Durchführen von Peer-Auffindung basierend auf einer Detektion des Ereignisses, das Peer-Auffindung auslöst, Senden eines Nähedetektionssignals eine Vielzahl von Malen ansprechend auf Detektieren des Ereignisses, das Peer-Auffindung auslöst, aufweist.

11. Verfahren nach Anspruch 10, wobei sukzessive Sendungen des Nähedetektionssignals voneinander um eine festgelegte Verzögerung beabstandet sind oder um eine zunehmend längere Verzögerung beabstandet sind.

12. Verfahren nach einem vorhergehenden Anspruch, das weiter Folgendes aufweist:
Senden (714) eines Nähedetektionssignals mit einer ersten Periodizität, wenn Ereignisse, die Peer-Auffindung auslösen, nicht detektiert werden; und Senden des Nähedetektionssignals mit einer zweiten Periodizität, wenn das Ereignis, das Peer-Auffindung auslöst, detektiert wird, wobei die erste Periodizität geringer ist als die zweite Periodizität.

**13.** Eine Einrichtung für Drahtloskommunikation, die Folgendes aufweist:

Mittel zum Empfangen von Broadcast-Information, die von einem Drahtlosnetzwerk gebroadcastet bzw. ausgestrahlt wird, wobei die Broadcast-Information anzeigt, dass bestimmte Einrichtungen und/oder Dienste innerhalb eines Abdeckungsbereichs verfügbar sind;
Mittel zum Entscheiden, ob ereignisausgelöste Peer-Discovery bzw. Peer-Auffindung durchgeführt werden soll basierend auf der empfangenen Broadcast-Information;
Mittel zum Detektieren eines Ereignisses, das Peer-Auffindung auslöst, wenn die Entscheidung getroffen wird ereignisausgelöste Peer-Auffindung durchzuführen; und
Mittel zum Durchführen von Peer-Auffindung basierend auf einer Detektion des Ereignisses, das Peer-Auffindung auslöst.

**14.** Ein Computerprogrammprodukt, das Folgendes aufweist:
ein nicht transitorisches computerlesbares Medium, das Code aufweist, der, wenn er durch die Einrichtung nach Anspruch 13 ausgeführt wird, die Einrichtung veranlasst zum Durchführen der Schritte des Verfahrens nach einem der Ansprüche 1 bis 12.

## Revendications

**1.** Procédé de communication sans fil, comprenant les étapes consistant à

recevoir, au niveau d'un dispositif, des informations de diffusion diffusées à partir d'un réseau sans fil, lesdites informations de diffusion indiquant que certains dispositifs et/ou services sont disponibles dans une zone de couverture ;
décider, au niveau du dispositif, s'il faut ou non effectuer la découverte de pairs déclenchée par un événement sur la base des informations de diffusion reçues ;
détecter (612), par le dispositif, un événement déclenchant la découverte entre pairs si la décision est prise d'effectuer la découverte de pairs déclenchée par un événement ; et
réaliser (614), par le dispositif, la découverte entre pairs sur la base de la détection de l'événement déclenchant la découverte entre pairs.

**2.** Procédé selon la revendication 1, dans lequel la détection de l'événement déclenchant la découverte entre pairs comprend la détection (712) d'une application devenant active au niveau du dispositif, ou la détection d'un changement de position du dispositif ou la détection de la mise sous tension du dispositif.

**3.** Procédé selon la revendication 2, dans lequel la détection du changement de la position du dispositif comprend la détection du changement de la position du dispositif sur la base d'une cellule de desserte du dispositif, ou des mesures d'intensité de signal effectuées par le dispositif, ou le positionnement du dispositif, ou une combinaison de ceux-ci.

**4.** Procédé selon l'une quelconque des revendications précédentes, dans lequel la réalisation de la découverte entre pairs sur la base de la détection de l'événement déclenchant la découverte entre pairs comprend le démarrage de la découverte de pairs par le dispositif en réponse à la détection de l'événement déclenchant la découverte entre pairs.

**5.** Procédé selon l'une quelconque des revendications 1 à 3, dans lequel la réalisation de la découverte entre pairs sur la base de la détection de l'événement déclenchant la découverte entre pairs comprend la transmission d'un signal de détection de proximité par le dispositif en réponse à la détection de l'événement déclenchant la découverte entre pairs.

**6.** Procédé de la revendication 5, comprenant en outre l'étape consistant à:
sauter la transmission du signal de détection de proximité par le dispositif lorsque des événements déclenchant la découverte entre pairs ne sont pas détectés.

**7.** Procédé selon l'une quelconque des revendications 1 à 3, dans lequel la réalisation de la découverte entre pairs sur la base de la détection de l'événement déclenchant la découverte entre pairs comprend la réception de signaux de détection de proximité provenant de dispositifs pairs en réponse à la détection de l'événement déclenchant la découverte entre pairs

8. Procédé de la revendication 7, comprenant l'étape consistant en outre à :
ignorer la réception des signaux de détection de proximité en provenance des dispositifs pairs lorsque des événements déclenchant la découverte entre pairs ne sont pas détectés.

9. Procédé selon l'une quelconque des revendications 1 à 3, dans lequel la réalisation de la découverte entre pairs sur la base de la détection de l'événement déclenchant la découverte entre pairs comprend la modification de la périodicité de la découverte de pairs par le dispositif en réponse à la détection de l'événement déclenchant la découverte entre pairs ou la modification d'au moins une caractéristique de découverte entre pairs par le dispositif en réponse à la détection de l'événement déclenchant la découverte entre pairs.

10. Procédé selon l'une quelconque des revendications 1 à 3, dans lequel la réalisation de la découverte entre pairs sur la base de la détection de l'événement déclenchant la découverte entre pairs comprend la transmission d'un signal de détection de proximité une pluralité de fois en réponse à la détection de l'événement déclenchant la découverte entre pairs.

11. Procédé selon la revendication 10, dans lequel les transmissions successives du signal de détection de proximité sont espacées d'un retard fixe ou espacées d'un retard progressivement plus long.

12. Procédé selon l'une quelconque des revendications précédentes, comprenant en outre les étapes consistant à :

transmettre (714) un signal de détection de proximité avec une première périodicité lorsque des événements déclenchant la découverte entre pairs ne sont pas détectés ; et
transmettre le signal de détection de proximité avec une seconde périodicité lorsque l'événement déclenchant la découverte entre pairs est détecté, la première périodicité étant inférieure à la seconde périodicité.

13. Dispositif pour la communication sans fil, comprenant :

des moyens pour recevoir des informations de diffusion diffusées à partir d'un réseau sans fil, lesdites informations de diffusion indiquant que certains dispositifs et/ou services sont disponibles dans une zone de couverture ;
des moyens pour décider s'il faut ou non effectuer la découverte de pairs déclenchée par un événement sur la base des informations de diffusion reçues ;
des moyens pour détecter un événement déclenchant la découverte entre pairs si la décision est prise d'effectuer la découverte de pairs déclenchée par un événement ; et
des moyens pour réaliser la découverte entre pairs sur la base de la détection de l'événement déclenchant la découverte entre pairs.

14. Produit formant programme d'ordinateur comprenant :
un support non-transitoire comprenant du code qui lorsqu'il est exécuté par le dispositif selon la revendication 13, amène le dispositif à exécuter les étapes du procédé de l'une quelconque des revendications 1 à 12.

**FIG. 1**

**Baseline PDS Transmission and Reception**

*FIG. 2*

**Client-Driven PDS Transmission**

*FIG. 3*

EP 2 586 223 B1

**Client-Driven PDS Reception**

P2P Communication
Not Desired

P2P Communication
Desired

P2P Communication
Not Desired

T1

TX PDS

T2

TX PDS  RX PDS

Tn

TX PDS

Time

*FIG. 4*

**Mobility-Based PDS Transmission**

One Long PDS Cycle
$T_{PDS,LONG\_CYCLE}$

One Long PDS Cycle
$T_{PDS,LONG\_CYCLE}$

One Long PDS Cycle
$T_{PDS,LONG\_CYCLE}$

TX PDS  RX PDS

TX PDS  RX PDS  TX PDS

PDS transmission due to change in position

TX PDS  RX PDS

Time

*FIG. 5*

EP 2 586 223 B1

*600*

Start

┌─────────────────────────────┐
│ *612*                        │
│ Detect an event triggering   │
│ peer discovery by a device   │
└─────────────────────────────┘

┌─────────────────────────────┐
│ *614*                        │
│ Perform peer discovery by the│
│ device based on detection of │
│ the event triggering peer    │
│ discovery                    │
└─────────────────────────────┘

End

**FIG. 6**

*700*

Start

┌──────────────────────────────┐
│ *712*                         │
│ Determine an application      │
│ becoming active on a first    │
│ device                        │
└──────────────────────────────┘

┌──────────────────────────────┐
│ *714*                         │
│ Transmit a query by the first │
│ device to request for a       │
│ service from a second device  │
│ to support the application    │
└──────────────────────────────┘

┌──────────────────────────────┐
│ *716*                         │
│ Detect a proximity detection  │
│ signal from the second device │
│ after transmitting the query  │
└──────────────────────────────┘

End

**FIG. 7**

_120u_

_812_

Receiver

_814_

Transmitter

_816_

P2P Signal
Transmission
Module

_818_

P2P Signal
Reception
Module

_820_

PDS Signal
Transmission
Module

_822_

PDS Signal
Detection
Module

_824_

WAN Signal
Transmission
Module

_826_

WAN Signal
Reception
Module

_828_

Controller/
Processor

_830_

Memory

**FIG. 8**

**FIG. 9**

EP 2 586 223 B1

**EP 2 586 223 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1450517 A1
- US 2009323648 A1